# EUROPEAN PATENT SPECIFICATION

(11) **EP 3 354 336 B1**
(45) Date of publication and mention of the grant of the patent: **07.07.2021**
(21) Application number: 16848682.7
(22) Date of filing: 23.09.2016
(51) Int. Cl.: B01J 23/46, B01D 53/94, B01J 23/63, F01N 3/10

(54) **CATALYTIC EXHAUST GAS PURIFICATION APPARATUS**
KATALYTISCHE ABGASREINIGUNGSVORRICHTUNG
APPAREIL DE PURIFICATION DE GAZ D'ÉCHAPPEMENT COMPRENANT UN CATALYSEUR

(30) Priority: 24.09.2015 JP 2015186788
(43) Date of publication of application: 01.08.2018
(73) Proprietor: Cataler Corporation, Shizuoka 437-1492 (JP)
(72) Inventor: INODA, Satoru, Kakegawa-shi Shizuoka 437-1492 (JP); MATSUEDA, Satoshi, Kakegawa-shi Shizuoka 437-1492 (JP); TAKI, Kenichi, Kakegawa-shi Shizuoka 437-1492 (JP); HIRAI, Akimasa, Kakegawa-shi Shizuoka 437-1492 (JP)
(74) Representative: Krauns, Christian
(86) International application number: PCT/JP2016/078091
(87) International publication number: WO 2017/051894

(56) References cited:
- EP-A1- 1 541 220
- EP-A1- 2 163 303
- EP-A1- 3 034 166
- EP-A1- 3 078 418
- WO-A1-2014/119749
- JP-A- H1 176 819
- JP-A- H09 500 570
- JP-A- 2010 521 301
- JP-A- 2014 117 701
- US-A- 5 597 771
- US-A1- 2010 135 879
- US-A1- 2014 171 300
- US-A1- 2015 367 328
- VEDYAGIN, ALEKSEY A. ET AL.: 'Catalytic Purification of Exhaust Gases Over Pd-Rh Alloy Catalysts' TOPICS IN CATALYSIS vol. 56, 30 May 2013, ISSN 1572-9028 pages 1008 - 1014, XP055370080

## Description

### TECHNICAL FIELD

The present invention relates to an exhaust gas purification apparatus comprising a catalyst.

### BACKGROUND ART

An exhaust gas purifying catalyst for purifying hydrocarbon (HC), carbon monoxide (CO), and nitrogen oxide (NOx) contained in exhaust gas from an internal combustion engine for automobiles etc., is known.

Among these exhaust gas purifying catalysts, three-way catalysts, for example, contain a precious metal, such as platinum (Pt), palladium (Pd) and rhodium (Rh), and a metal oxide carrier supporting the precious metal, such as alumina carrier, ceria-zirconia composite oxide carrier. Three-way catalysts exhibit high purification performance against exhaust gas generated by burning mixed gas having the near stoichiometric air-fuel ratio in an internal combustion engine.

In addition, NOx storage reduction catalysts contain a precious metal as explained above, a storage agent, such as an alkali metal and/or alkaline-earth metal including barium (Ba) and potassium (K), and a metal oxide carrier as explained above supporting the precious metal and the storage agent. NOx storage reduction catalysts can first store NOx contained in exhaust gas in the storage agent under the lean condition of air-fuel ratio (under oxygen excess atmosphere), and then expose it to the reducing atmosphere to reduce and decompose the stored NOx and emit it as N₂.

Such catalysts for exhaust gas purification are disclosed in, for example, Patent Documents 1 to 9; the document 1 is JP S63-070214 A, the document 2 is JP H01-242149 A, the document 3 is JP H10-202101 A, the document 4 is JP H11-076819 A, the document 5 is JP 2004-041866 A, the document 6 is JP 2004-041867 A, the document 7 is JP 2004-041868 A, the document 8 is JP2006-098490A, and the document 9 is JP 2014-223585 A.

Furthermore, the EP 1 541 220 A1 discloses an exhaust treatment device comprising a substrate and a catalyst layer deposited on the substrate, the catalyst layer comprising a first catalyst metal and a second catalyst metal, wherein greater than or equal to about 70 wt% of the first catalyst metal and the second catalyst metal is non-alloyed under alloying conditions, wherein the weight percent is based on a combined weight of the first catalyst metal and the second catalyst metal. The first catalyst metal and the second catalyst metal are different and are individually selected from the group consisting of platinum, palladium, rhodium, rhenium, iridium, ruthenium, and osmium. The EP 2 163 303 A1 discloses an exhaust gas-purifying catalyst including a substrate, a lower layer covering the substrate and including an oxygen storage material and palladium, the lower layer being rhodium-free, and an upper layer covering the lower layer and including rhodium and a carrier supporting it, the upper layer being lower in oxygen storage capacity than the lower layer. The EP 3 034 166 A1 discloses an exhaust cleaning catalyst comprising a substrate and a catalyst coating layer that includes CeO₂. The catalyst coating layer is constituted in its thickness direction with multiple coating layers. In a top coating layer located at the outermost surface, the CeO₂ content in a top coating layer's upstream portion is less than the CeO₂ content in a top coating layer's downstream portion; and the CeO₂ content in the top coating layer's upstream portion is less than the CeO₂ content in a lower coating layer. The CeO₂ content per liter of catalyst volume in the entire coating layer is 10 g/L to 30 g/L. The EP 3 078 418 A1 discloses an exhaust gas purification catalyst including fine composite-metal particles containing Rh and Pd, wherein, when the fine composite-metal particles in the exhaust gas purification catalyst are analyzed by STEM-EDX, the average ratio of the amount of Pd with respect to the total amount of Rh and Pd in the fine composite-metal particles is 1.7 atomic% or more and 24.8 atomic% or less.

### DISCLOSURE OF THE INVENTION

### [Problems to be Solved by the Invention]

The objective of the present invention is to provide an exhaust gas purification apparatus comprising a catalyst for exhaust gas purification which can effectively purify exhaust gas, in particular exhaust gas containing unsaturated hydrocarbon.

### [Means for Solving the Problems]

The inventors of the present invention have found that the aforementioned problems are solved by the aspects indicated below.
[Aspect 1] An exhaust gas purification apparatus comprising a substrate and a catalyst layer thereon, wherein the catalyst layer comprises a first catalyst particle, a second catalyst particle, a first carrier particle supporting the first catalyst particle and a second carrier particle supporting the second catalyst particle,
   wherein the first catalyst particle is Pd-Rh alloy particle;
   wherein the second catalyst particle is Pd-Rh alloy particle; and
   wherein the molar ratio of Rh to the total of Pd and Rh in the first catalyst particle is 0.50 times or less of the molar ratio of Rh to the total of Pd and Rh in the second catalyst particle.
[Aspect 2] The exhaust gas purification apparatus according to Aspect 1, wherein the molar ratio of Rh to the total of Pd and Rh in the first catalyst particle is 0.20 times or less of the molar ratio of Rh to the total of Pd and Rh in the second catalyst particle.
[Aspect 3] The exhaust gas purification apparatus according to Aspect 1 or 2, wherein the first catalyst particle contain more than 90 mol% of Pd, based on the total metal atoms contained therein, and the second catalyst particle contains 30 mol% or more and 90 mol% or less of Pd and 10 mol% or more and 70 mol% or less of Rh based on the total metal atom contained therein.
[Aspect 4] The exhaust gas purification apparatus according to any one of Aspects 1 to 3, wherein the weight ratio of the first catalyst particle to the second catalyst particle is 0.1 or more and 20.0 or less.
[Aspect 5] The exhaust gas purification apparatus according to any one of Aspects 1 to 4, wherein the at least one carrier particle contains a material selected from the group consisting of alumina, ceria, zirconia, silica, titania and solid solutions thereof and combinations thereof.
[Aspect 6] A method of producing an exhaust gas purification apparatus comprising a substrate and a catalyst layer thereon, comprising a first catalyst particle and a second catalyst particle, a first carrier particle supporting the first catalyst particle and a second carrier particle supporting the second catalyst particle, wherein the method comprises the following steps (a), (b), (c) and (g),:
   (a) impregnating a first carrier particle with a first aqueous solution containing Pd salt and optional Rh salt, and drying it to obtain a first unfired catalyst;
   (b) impregnating a second carrier particle with a second aqueous solution containing Pd salt and Rh salt, and drying it to obtain a second unfired catalyst;
   (c) firing the first unfired catalyst and the second unfired catalyst to obtain the first catalyst particle (1) and the second catalyst particle (2); and
   (g) forming the catalyst layer comprising the first catalyst particle and the second catalyst particle on the substrate;
   wherein the molar ratio of Rh to the total of Pd and Rh in the first catalyst particle is 0.50 times or less of the molar ratio of Rh to the total of Pd and Rh in the second catalyst particle.

### [Effects of the Invention]

According to the present invention, an exhaust gas purification apparatus comprising a catalyst for exhaust gas purification which can effectively purify exhaust gas, in particular exhaust gas containing unsaturated hydrocarbon, can be provided.

### BRIEF DESCRIPTION OF THE DRAWINGS

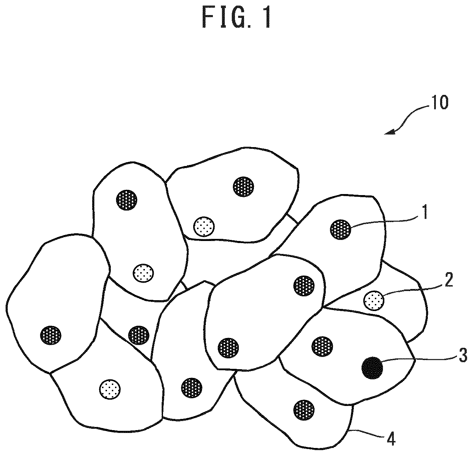

FIG. 1 is a conceptual diagram of a catalyst for exhaust gas purification of the present invention.

### EMBODIMENT FOR CARRYING OUT THE INVENTION

### Catalyst for Exhaust Gas Purification

The catalyst of the exhaust gas purification apparatus of the present invention has a first catalyst particle, a second catalyst particle, and at least one carrier particle supporting the first catalyst particle and/or second catalyst particle. The first catalyst particle is Pd particle or Pd-Rh alloy particle, and the second catalyst particle is Pd-Rh alloy particle. In addition, the molar ratio of Rh to the total of Pd and Rh in the first catalyst particle is 0.50 times or less of the molar ratio of Rh to the total of Pd and Rh in the second catalyst particle.

Rh having high reducing activity and Pd having high oxidizing activity are preferably used for catalysts particles in catalysts for exhaust gas purification, in particular, three-way catalysts. On the other hand, it is known that exhaust gas purification is generally decreased due to alloying of Pd and Rh used for catalysts particles. Therefore, as disclosed in Patent Document 7, Pd and Rh are usually used in catalysts for exhaust gas purification, without alloying them and preventing them from alloying even in a high temperature environment.

However, the present inventors have found that alloying of Pd and Rh can promote the reaction of purifying exhaust gas, in particular the oxidizing reaction of unsaturated hydrocarbon. Then, the catalyst for exhaust gas purification which can highly effectively purify hydrocarbon in exhaust gas have found by using a first catalyst particle for promoting the oxidizing reaction of saturated hydrocarbon in conjunction with a second catalyst particle for promoting the oxidizing reaction of unsaturated hydrocarbon.

### Catalyst Particle

The molar ratio of Rh to the total of Pd and Rh in the first catalyst particle may be 0.50 times or less, 0.30 times or less, 0.20 times or less, 0.10 times or less, or 0.05 times or less of the molar ratio of Rh to the total of Pd and Rh in the second catalyst particle. Since the first catalyst particle may not contain Rh, the lower limit of the ratio can be zero and the lower limit can be 0.001 times or more, 0.05 times or more, or 0.01 times or more.

Taking the proportion of unsaturated hydrocarbon in exhaust gas which is oxidized by the second catalyst particle into consideration, the amounts of the first catalyst particle and the second catalyst particle are preferably adjusted. For examples, the weight ratio of the first catalyst particle to the second catalyst particle (the weight of the first catalyst particle/ the weight of the second catalyst particle) may be 0.10 or more, 0.30 or more, 0.50 or more, 1.0 or more, 2.0 or more, or 3.0 or more, and may be 50 or less, 30 or less, 20 or less, 10 or less, or 5.0 or less.

The catalyst of the exhaust gas purification apparatus of the present invention may have one or more catalyst particle with the composition different from the compositions of the first catalyst particle and the second catalyst particle. For examples, the third catalyst particle can include platinum group metals or alloys thereof, in particular the third catalyst particle can be Rh particle, Pt particle, etc. Incidentally, in the present description, an alloy particle refer not only to a solid solution in which metals are fully miscible with each other, but also to a particle in which each metals are composited.

In view of increasing the area contacted with exhaust gas, the catalyst particle are preferably a particle having the sufficiently small diameter. Typically, the average particle diameter of the catalyst particle may be from 1 nm to 20 nm and may be 10 nm or less, 7 nm or less, 5 nm or less, which is the average value of the equivalent diameters measured by TEM observation. The equivalent diameter of a particle refer to the diameter of a perfect circle having an outer peripheral length equal to the outer peripheral length of the particle.

The catalyst particle may be supported at the amount in total of 0.1 parts by mass or more, 0.3 parts by mass or more, 0.5 parts by mass or more, or 1.0 parts by mass or more and may be supported at the amount in total of 10 parts by mass or less, 5 parts by mass or less, 3.0 parts by mass or less, 2.0 parts by mass or less, relative to 100 parts by mass of the carrier particle.

### (First Catalyst Particle)

The molar ratio of Rh to the total of Pd and Rh in the first catalyst particle (mole number of Rh/mole numbers of Pd and Rh) may be 10.0 mol% or less, 8.0 mol% or less, 5.0 mol% or less, 3.0 mol% or less, 2.0 mol% or less, or 1.0 mol% or less.

The first catalyst particle preferably contains more than 90 mol% of Pd and more preferably contains 92 mol% or more, 94 mol% or more, 95 mol% or more, 96 mol% or more or 98 mol% or more of Pd. Pd may be contained in the first catalyst particle at the amount of 99 mol% or less, or 98 mol% or less.

The first catalyst particle is Pd particle or Pd-Rh alloy particle and therefore may contain or may not contain Rh. However, the first catalyst particle preferably contain Rh in view of preventing Pd from sintered. If the first catalyst particle contain Rh, the amount of Rh may be more than 0 mol%, 0.1 mol % or more, 0.5 mol% or more, or 0.8 mol% or more and may be 10 mol% or less, 8 mol% or less, 6 mol% or less, 5 mol% or less, 4 mol% or less, or 2 mol% or less. The first catalyst particle may further contain another type of metals.

### (Second Catalyst Particle)

The molar ratio of Rh to the total of Pd and Rh in the second catalyst particle (mole number of Rh/mole numbers of Pd and Rh) may be 5 mol% or more, 10 mol% or more, 15 mol% or more, or 20 mol% or more, and may be 70 mol% or less, 60 mol% or less, 50 mol% or less, or 40 mol% or less.

The second catalyst particle is Pd-Rh alloy particle and preferably contains 30 mol% or more of Pd and more preferably contains 40 mol% or more, 50 mol% or more, 60 mol% or more of Pd. The second catalyst particle preferably contains 95 mol% or less of Pd and more preferably contains 90 mol% or less, 85 mol% or less, 80 mol% or less, 75 mol% or less, or 70 mol% or less of Pd.

The second catalyst particle preferably contains 5 mol% or more of Rh and more preferably contains 10 mol% or more, 20 mol% or more, 30 mol% or more, or 40 mol% or more of Rh. The second catalyst particle preferably contains 70 mol% or less of Rh and more preferably contains 60 mol% or less, 50 mol% or less, or 40 mol% or less of Rh. The second catalyst particle may further contain another type of metals, in particular another precious metal.

### Carrier Particle

The above described catalyst particles are supported by distinct carrier particles. The type of the carrier particles is not particularly limited if it can stably support the catalyst particles over the long term. Such carrier particles include particles formed of the materials, such as oxides and non-oxides, having the high specific surface area.

The material of the carrier particles includes alumina, ceria, zirconia, silica, titania, and the solid solution thereof (for example, cerium-zirconium oxides (CZ)) and the combinations thereof. These materials may further contain barium oxide, lanthanum oxide, yttrium oxide, etc., (for example, zirconium-cerium-yttrium oxide (ZCY)). In view of improving the thermal stability of the catalyst for exhaust gas purification, ceramics, such as alumina and zirconia, having high heat resistance, can preferably be used for the carrier particle.

The alumina-based materials includes porous carrier particles based on alumina, such as γ-alumina, silica-alumina, and β-alumina. In addition, non-oxides, such as silicon nitride, aluminum nitride, carbon nitride, and titanium nitride, can be preferably used for the carrier particle.

The carrier particles comprise a first carrier particle supporting the first catalyst particle and a second carrier particle supporting the second catalyst particle. The first carrier particle and the second carrier particle may be composed of the different compositions or materials or of substantially the same compositions or materials.

In view of the supporting capability, heat resistivity, structural stability, etc., the specific surface area of the carrier particles may be 50 m²/g or more, 100 m²/g or more, 150 m²/g or more, or 200 m²/g or more, and may be 2000 m²/g or less, 1000 m²/g or less, 800 m²/g or less, 500 m²/g or less, or 400 m²/g or less.

The average particle diameter of the carrier particles may be 10 nm or more, 30 nm or more, 50 nm or more, or 100 nm or more and may be 500 nm or less, 300 nm or less, or 200 nm or less, which is the average value of the equivalent diameters measured by TEM observation.

Fig. 1 shows a conceptual diagram of a catalyst of the exhaust gas purification apparatus of the present invention. The catalyst for exhaust gas purification (10) has a first catalyst particle (1) which is Pd particle or Pd-Rh alloy particle, a second catalyst particle (2) containing Pd and Rh, optional third catalyst particle (3) and a carrier particle (4) supporting these catalyst particles (1, 2, 3).

### Method of Producing Catalyst for Exhaust Gas Purification

The method of producing a catalyst for exhaust gas purification comprises either the following steps (a), (b) and (c):
(a) impregnating a first carrier particle with a first aqueous solution containing Pd salt and optional Rh salt, and drying it to obtain a first unfired catalyst;
(b) impregnating a second carrier particle with a second aqueous solution containing Pd salt and Rh salt, and drying it to obtain a second unfired catalyst;
(c) firing the first unfired catalyst and the second unfired catalyst;
wherein Pd and Rh are alloyed, before impregnating the first carrier particle with the first aqueous solution containing Pd salt and Rh salt or when firing the first unfired catalyst,
wherein the molar ratio of Rh to the total of Pd and Rh in the first catalyst particle is 0.50 times or less of the molar ratio of Rh to the total of Pd and Rh in the second catalyst particle.

In the below description, the aspect comprising the steps (a), (b) and (c) is referred to as first embodiment of the method of the present invention.

### First Embodiment

The method of producing a catalyst for exhaust gas purification according to the first embodiment of the present invention comprises impregnating a first carrier particle with a first aqueous solution containing Pd salt and optional Rh salt, and drying it to obtain a first unfired catalyst; impregnating a second carrier particle with a second aqueous solution containing Pd salt and Rh salt, and drying it to obtain a second unfired catalyst; and firing the first unfired catalyst and the second unfired catalyst to obtain the catalyst for exhaust gas purification having a first catalyst particle and a second catalyst particle.

In this method, if the first catalyst particle finally obtained is Pd-Rh alloy article, Pd and Rh can be alloyed (or composited), before impregnating the first carrier particle with the first aqueous solution or when firing the first unfired catalyst. In addition, Pd and Rh in the second catalyst particle can be alloyed (or composited), before impregnating the second carrier particle with the second aqueous solution or when firing the second unfired catalyst. Further, the molar ratio of Rh to the total of Pd and Rh in the first catalyst particle is 0.50 times or less of the molar ratio of Rh to the total of Pd and Rh in the second catalyst particle.

In the step of obtaining the first unfired catalyst, the first aqueous solution containing Pd salt and optional Rh salt is prepared. Pd and optional Rh can be supported on the carrier particle by adding the first carrier particle to the first aqueous solution and thoroughly mixing thereof. The carrier particle supporting Pd and optional Rh (the first unfired catalyst) can be obtained by separating from the aqueous solution by filtration, etc., and then drying. The salts of Pd and Rh include strong acid salts, in particular nitrate salts and sulfate salts.

If the first catalyst particle finally obtained is Pd-Rh alloy particle, the first aqueous solution may contain a protective agent.

The amounts and types of the protecting agent are not particularly limited as long as it can coordinate or adsorb to the surface of the metal particles to suppress aggregation and grain growth of the metal particles and to stabilize the metal particles. The protecting agent includes protective agents known as those for metal colloids. For example, an organic polymer or a low-molecular organic compound containing a heteroatom such as nitrogen, phosphorus, oxygen, sulfur, etc., having strong coordination force can be used as the protective agent. As the organic polymer protecting agent, polymeric compounds such as polyamide, polypeptide, polyimide, polyether, polycarbonate, polyacrylonitrile, polyacrylic acid, polyacrylate, polyacrylamide, polyvinyl alcohol, heterocyclic polymer, polyester, etc., can be used. In particular, polyvinyl pyrrolidone, polyvinyl pyridine, polyacrylamide, etc., can be preferably used.

The size of a metal particle can be more reliably controlled to a nanometer size by adding such a protecting agent to the above aqueous solution. The protecting agent can be added to the first aqueous solution at the amount of, for examples, 5 wt% or less, 3 wt% or less, 1 wt% or less, or 0.5 wt% or less and 0.01 wt% or more, 0.05 wt% or more, 0.1 wt% or more, or 0.2 wt% or more.

If Pd and Rh are alloyed in the aqueous solution, these can be alloyed by adding a reducing agent to the first aqueous solution. The reducing agent includes known reducing agents, such as sodium borohydride, alcohols (for example, methanol, ethanol, 1-propanol, 2-propanol), etc. In this case, the first aqueous solution to which the reducing agent is added can be optionally heated. For examples, the first aqueous solution to which the reducing agent is added can be heated at the temperature of 50 °C or higher and 100 °C or lower for 1 to 3 hours.

Further, a method disclosed in JP2015-113519A can be used for alloying Pd and Rh in the aqueous solution without using a reducing agent.

The step of obtaining the second unfired catalyst is substantially the same as the step of obtaining the first unfired catalyst, except that the Rh salt is necessarily used.

In the step of obtaining the catalyst for exhaust gas purification, the first unfired catalyst and the second unfired catalyst obtained as above are fired.

The firing temperature may be, for examples, 300 °C or higher, 400 °C or higher, or 500 °C or higher and may be 1500 °C or lower, 1300 °C or lower, or 1100 °C or lower. The firing time may be 1 hour or more, 2 hours or more, or 4 hours or more and may be 10 hours or less, or 8 hours or less.

Pd and Rh are alloyed in this firing step, if Pd and Rh to be contained the first catalyst particle and the second catalyst particle have not been alloyed before the firing step. In this case, the firing is preferably carried out under in a reducing atmosphere, such as under the atmosphere in which a mixed gas containing reducing gas (for example, hydrogen, ammonia, etc.,) in inert gas (for example, nitrogen, noble gas etc.,) at 1 volume % to 20 volume % (in particular, 2 volume % to 10 volume % or 4 volume % to 8 volume %).

If Pd and Rh are not alloyed in this firing step, the firing can be carried out in the atmosphere.

A step of supporting a precious metal on the catalyst may be carried out by redispersing the fired catalyst in water and adding the precious metal salt into it or by redispersing the fired catalyst in an aqueous solution containing the precious metal salt.

The catalyst for exhaust gas purification thus obtained may be the same as the catalyst for exhaust gas purification as explained above. Therefore, the catalyst for exhaust gas purification thus obtained comprises the first catalyst particle which is Pd-Rh alloy particle, the second catalyst particle which is Pd-Rh alloy particle, and the carrier particles supporting the first catalyst particle and second catalyst particle. The first catalyst comprises the first catalyst particle and the first carrier particle supporting the first catalyst particle, and the second catalyst comprises the second catalyst particle and the second carrier particle supporting the second catalyst particle. The details of the first catalyst particle, second catalyst particle and the carrier particle are as explained above.

### Exhaust Gas Purification Apparatus

The exhaust gas purification apparatus of the present invention comprises the catalyst for exhaust gas purification as explained above and a substrate. The catalyst for exhaust gas purification may be a catalyst for exhaust gas purification obtained by the method of producing a catalyst for exhaust gas purification disclosed above.

A substrate for the carrier particle may be a honey-comb type substrate of a straight-flow type or a wall-flow type, etc., which is generally used in an exhaust gas purification apparatus. The types of materials for the substrate is not particularly limited, and may be, for example, a substrate of ceramic, silicon carbide, metal, etc. When using such as substrate, a catalyst layer comprising the catalyst for exhaust gas purification is formed on the substrate.

Further, a substrate as disclosed in JP2015-085241A may be used for the substrate.

### [Examples]

### Production of Catalyst

### Example 1

A mixed solution of Pd nitrate aqueous solution (17.500 mmol of Pd) and Rh nitrate aqueous solution (0.177 mmol of Rh) was dispersed in a vessel containing 1000 ml of ion-exchanged water, and then ultrasonic treatment was carried out for 1 hour by dipping the vessel into the radio-frequency ultrasonic bath (frequency of 3MHz). Just after the treatment, a protecting agent of 0.2 grams of polyvinyl pyrrolidone (PVP) solved in 100 ml of ion-exchanged water was added into it and it was thoroughly mixed. 85.10 grams of γ-alumina was added as a first carrier particle into this solution, and it was thoroughly mixed so that Pd and Rh are adsorbed and supported on the surface of the alumina. Then, the alumina supporting Pd and Rh was separated from the water solution by a suction filtration. The supporting efficiency of Pd and Rh was found to be 100% after analyzing the filtrate by ICP atomic emission spectrophotometry. By this process, a first unfired catalyst was obtained.

A mixed solution of Pd nitrate aqueous solution (2.500 mmol of Pd) and Rh nitrate aqueous solution (1.071 mmol of Rh) was dispersed in a vessel containing 1000 ml of ion-exchanged water, and then ultrasonic treatment was carried out for 1 hour by dipping the vessel into the radio-frequency ultrasonic bath (frequency of 3MHz). Just after the treatment, a protecting agent of 0.2 grams of PVP solved in 100 ml of ion-exchanged water was added into it and it was thoroughly mixed. 12.16 grams of alumina was added as a second carrier particle into this solution, and it was thoroughly mixed so that Pd and Rh were adsorbed and supported on the surface of the alumina. Then, the alumina supporting Pd and Rh was separated from the water solution by a suction filtration. The supporting efficiency of Pd and Rh was found to be 100% after analyzing the filtrate by ICP atomic emission spectrophotometry. By this process, a second unfired catalyst was obtained.

The first and second catalysts above were stored in a tubular furnace, and then Pd and Rh were alloyed by firing at 1000°C for 5 hours with flowing at the flow ratio of 500 ml/min of H₂-containing nitrogen gas containing hydrogen (H₂) at 5 volume % into it. A catalyst comprising the first catalyst particle and the second catalyst particle is then obtained.

Further, the above catalyst was dispersed in 1000 ml of ion-exchanged water again, and Rh nitrate aqueous solution (4.752 mmol of Rh) was added into it and it was thoroughly mixed, so that Rh was adsorbed and supported on the surface of the catalyst. Then, the catalyst further supporting Rh was separated from the water solution by a suction filtration. The supporting efficiency of Rh was found to be 100% after analyzing the filtrate by ICP atomic emission spectrophotometry. By this process, a catalyst having a third catalyst particle was obtained.

The catalyst thus obtained was fired at 600 °C for three hours in the air. The obtained powder was formed by compressing and then ground into the form of pellet having a size of 0.5 to 1.0 mm. By this process, a catalyst according to Example 1 having a first catalyst particle, a second catalyst particle and a third catalyst particle was obtained. The Pd content and Rh content were respectively 2.128 wt% and 0.617 wt% in the finally obtained catalyst.

### Examples 2 to 18

Except that the Pd content and Rh content, and the amounts of the first carrier particle and second carrier particle comprised in the first catalyst particle, the second catalyst particle and/or the third catalyst particle were changed to those listed in Table 1, catalysts according to Examples 2 to 18 were prepared in the similar way to Example 1. The first catalyst particle of Example 2 was composed only of Pd and did not contain Rh. In these Examples, the Pd content and Rh content of the final catalysts were 2.128 wt% and 0.617 wt%.

### Examples 19 and 20

Except that zirconium (Ze)- cerium (Ce)- yttrium (Y) oxide (hereinafter referred to "ZCY", weight ratio of Ze/Ce/Y is 8:1:1) was used instead of using alumina, the catalyst according to Example 19 was prepared in the similar way to Example 19. In addition, the catalyst according to Example 20 was obtained by changing Rh weight from the production process of the catalyst according to Example 19. In these Examples, the Pd content and Rh content of the final catalysts were 2.128 wt% and 0.617 wt%.

### Comparative Examples 1 and 2

Except that the first unfired catalyst was not used and the second unfired catalyst was only used, the catalyst according to Comparative Example 1 was obtained in the similar way to Example 1. In addition, except that the second unfired catalyst was not used and the first unfired catalyst was only used, the catalyst according to Comparative Example 2 was obtained in the similar way to Example 1.

### Measurement Method

### Measurement of Activity

Each catalyst obtained as above was weighed to 10 grams and heated at 1000°C for 5 hours in a tubular furnace for a durability test with alternately flowing at the flow ratio of 1 little/min. of CO-containing nitrogen gas containing carbon monooxide (CO) at 4 volume % and of O₂-containing nitrogen gas containing oxygen (O₂) at 2 volume %, in 5-minite periods.

Each catalyst after the durability test were placed in a normal-pressure fixed-bed rector device and the temperature was increased at the ratio of 30°C/min. from room temperature with flowing a stoichiometric model gas containing only saturated hydrocarbon of propane as a carbon source. In this period, the purification ratio of propane was measured for each catalyst and recorded the temperature when the purification ratio became 50 % (sat. HC purif. temp.).

In the same way, the temperature was increased at the ratio of 30°C/min. from room temperature with flowing a stoichiometric model gas containing only unsaturated hydrocarbon of propene as a carbon source. In this period, the purification ratio of propene was measured for each catalyst and recorded the temperature when the purification ratio became 50 % (unsat. HC purif. temp.).

Furthermore, in the same way, the temperature was increased at the ratio of 30°C/min. from room temperature with flowing a stoichiometric model gas containing propane and propene at the volume ratio of 1:4 as a carbon source. In this period, the purification ratio of the mixed hydrocarbon was measured for each catalyst and recorded the temperature when the purification ratio became 50 % (mixed HC purif. temp.).

### Measurement of Alloyed Ratio

At the preparation steps for each catalyst, the first catalyst and the second catalyst were observed at the 200,000x magnification through a field emission scanning electron microscope (FE-SEM). A catalyst particle having a high electron density were searched in the observed view, and the quantitative analysis of Pd and Rh were carried out on the particle thorough an energy dispersive X-ray analysis (EDX analysis). After analyzing a plurality of particles thorough the same quantitative analysis, it was found that Pd and Rh were alloyed in the particle depending on the added amount.

### Results

The results are shown in Table 1.

**[Table 1]**

| Ex | 1^{st} cata. par ticle | | | 1^{st} carrier* [g] | 2^{nd} cata. par ticle | | | 2^{nd} carrier* [g] | 3^{rd} cata. particle | 1^{st} Rh mol. ratio / 2^{nd} Rh mol. ratio | st 1 cata. particle weight /2^{nd} cata. particle weight | sat. HC purif. temp. [°C] | unsat. HC purif. temp. [°C] | mixed HC purif. temp. [°C] |
|---|---|---|---|---|---|---|---|---|---|---|---|---|---|---|
| | Pd [mmol] | Rh [mmol] | Rh mol. ratio [mol%] | | Pd [mmol] | Rh [mmol] | Rh mol. ratio [mol%] | | Rh [mmol] | | | | | |
| Ex. 1 | 17.5 | 0.18 | 1.0 | 85.1 | 2.50 | 1.07 | 30 | 12.2 | 4.75 | 0.033 | 4.9 | 400 | 310 | 350 |
| Ex. 2 | 17.5 | 0.00 | 0.0 | 85.1 | 2.50 | 1.07 | 30 | 12.2 | 4.93 | 0.000 | 4.9 | 400 | 310 | 355 |
| Ex. 3 | 17.5 | 0.54 | 3.0 | 85.1 | 2.50 | 1.07 | 30 | 12.2 | 4.39 | 0.100 | 5.1 | 405 | 310 | 345 |
| Ex. 4 | 17.5 | 0.92 | 5.0 | 85.1 | 2.50 | 1.07 | 30 | 12.2 | 4.01 | 0.167 | 5.2 | 405 | 305 | 350 |
| Ex. 5 | 17.5 | 1.32 | 7.0 | 85.1 | 2.50 | 1.07 | 30 | 12.2 | 3.61 | 0.233 | 5.3 | 410 | 305 | 370 |
| Ex. 6 | 17.5 | 0.92 | 5.0 | 85.1 | 2.50 | 0.44 | 15 | 12.2 | 3.61 | 0.333 | 6.3 | 405 | 315 | 355 |
| Ex. 7 | 17.5 | 1 .32 | 7.0 | 85.1 | 2.50 | 0.44 | 15 | 12.2 | 3.61 | 0.466 | 6.4 | 410 | 315 | 360 |
| Ex. 8 | 17.5 | 0.18 | 1.0 | 85.1 | 2.50 | 0.28 | 10 | 12.2 | 5.55 | 0.100 | 6.4 | 400 | 325 | 375 |
| Ex. 9 | 17.5 | 0.18 | 1.0 | 85.1 | 2.50 | 0.63 | 20 | 12.2 | 5.20 | 0.050 | 5.7 | 400 | 320 | 360 |
| Ex. 10 | 17.5 | 0.18 | 1.0 | 85.1 | 2.50 | 1.67 | 40 | 12.2 | 4.16 | 0.025 | 4.2 | 415 | 300 | 355 |
| Ex. 11 | 17.5 | 0.18 | 1.0 | 85.1 | 2.50 | 2.50 | 50 | 12.2 | 3.32 | 0.020 | | 420 | 300 | 365 |
| Ex. 12 | 17.5 | 0.18 | 1 .0 | 85.1 | 2.50 | 3.75 | 60 | 12.2 | 2.07 | 0.017 | 2.8 | 425 | 295 | 380 |
| Ex. 13 | 8.0 | 0.08 | 1.0 | 38.9 | 12.00 | 5.14 | 30 | 58.4 | 0.78 | 0.033 | 0.5 | 415 | 305 | 375 |
| Ex. 14 | 11.5 | 0.12 | 1.0 | 55.9 | 8.50 | 3.64 | 30 | 41.3 | 2.24 | 0.033 | 1.0 | 410 | 305 | 360 |
| Ex. 15 | 16.3 | 0 .16 | 1.0 | 79.0 | 3.75 | 1.6 | 30 | 18.2 | 4.23 | 0.033 | 3.1 | 405 | 315 | 355 |
| Ex. 16 | 18.8 | 0 .19 | 1.0 | 91.2 | 1.25 | 0.54 | 30 | 6.1 | 5.27 | 0.033 | 10.6 | 405 | 320 | 355 |
| Ex. 17 | 19.3 | 0.19 | 1.0 | 93.6 | 0.75 | 0.32 | 30 | 3.6 | 5.48 | 0.033 | 18.1 | 400 | 325 | 360 |
| Ex. 18 | 19.5 | 0.20 | 1.0 | 94.8 | 0.50 | 0.21 | 30 | 2.4 | 5.59 | 0.033 | 27.6 | 400 | 335 | 380 |
| Ex. 19 | 17.5 | 0.18 | 1.0 | 85.1 | 2.50 | 1.07 | 30 | 12.2 | 4.75 | 0.033 | 5.0 | 410 | 320 | 355 |
| Ex. 20 | 17.5 | 0.18 | 1.0 | 85.1 | 2.50 | 0.28 | 10 | 12.2 | 5.55 | 0.100 | 6.4 | 410 | 335 | 380 |
| Com. Ex. 1 | - | - | - | - | 2.50 | 1.07 | 30 | 12.2 | 4.93 | - | - | 435 | 300 | 380 |
| Com. Ex. 2 | 17.5 | 0 .18 | 1.0 | 85.1 | - | - | - | - | 5.82 | - | - | 395 | 340 | 385 |

| | | | | | | | | | | | | | | |
|---|---|---|---|---|---|---|---|---|---|---|---|---|---|---|
| * Examples 19 and 20 use ZCY carrier particle. | | | | | | | | | | | | | | |

From Table 1, it can be seen that the catalyst according to Comparative Example 1 not having the first catalyst particle which is a catalyst particle of Pd only or a catalyst particle of Pd alloy containing Rh at a small molar ratio, exhibits a poor purification ability of a saturated hydrocarbon, based on the fact that the saturated HC purification temperature is high. In addition, it can be seen that the catalyst according to Comparative Example 2 not having the second catalyst particle which is a catalyst particle of Pd alloy containing Rh at a high molar ratio, exhibits a poor purification ability of an unsaturated hydrocarbon, based on the fact that the unsaturated HC purification temperature is high. On the other hand, the catalysts according to Examples 1 to 20 having both the first catalyst particle which is a catalyst particle of Pd only or a catalyst particle of Pd alloy containing Rh at a small molar ratio, and the second catalyst particle which is a catalyst particle of Pd alloy containing Rh at a high molar ratio, show purification abilities of a saturated hydrocarbon and an unsaturated hydrocarbon depending on the Rh contents and weights of the first catalyst particle and the second catalyst particle. Comparing Example 1 with Example 2, the sintering of Pd was more effectively prevented in Example 1 than Example 2 since the first catalyst particle contains Rh, and therefore the mixed HC purification temperature of Example 1 became low.

### BRIEF DESCRIPTION OF THE REFERENCE SYMBOLS

- 1: First catalyst particle
- 2: Second catalyst particle
- 3: Third catalyst particle
- 4: Carrier particle
- 10: Catalyst for exhaust gas purification

## Claims

1. An exhaust gas purification apparatus comprising a substrate and a catalyst layer thereon, wherein the catalyst layer comprises a first catalyst particle (1), a second catalyst particle (2), a first carrier particle (4) supporting the first catalyst particle (1) and a second carrier particle (4) supporting the second catalyst particle (2),
wherein the first catalyst particle (1) is Pd-Rh alloy particle;
wherein the second catalyst particle (2) is Pd-Rh alloy particle; and
wherein the molar ratio of Rh to the total of Pd and Rh in the first catalyst particle (1) is 0.50 times or less of the molar ratio of Rh to the total of Pd and Rh in the second catalyst particle (2).

2. The exhaust gas purification apparatus according to claim 1, wherein the molar ratio of Rh to the total of Pd and Rh in the first catalyst particle (1) is 0.20 times or less of the molar ratio of Rh to the total of Pd and Rh in the second catalyst particle (2).

3. The exhaust gas purification apparatus according to claim 1 or 2, wherein the first catalyst particle (1) contain more than 90 mol% of Pd, based on the total metal atoms contained therein, and the second catalyst particle (2) contains 30 mol% or more and 90 mol% or less of Pd and 10 mol% or more and 70 mol% or less of Rh based on the total metal atom contained therein.

4. The exhaust gas purification apparatus according to any one of claims 1 to 3, wherein the weight ratio of the first catalyst particle (1) to the second catalyst particle (2) is 0.1 or more and 20.0 or less.

5. The exhaust gas purification apparatus according to any one of claims 1 to 4, wherein the at least one carrier particle (4) contains a material selected from the group consisting of alumina, ceria, zirconia, silica, titania and solid solutions thereof and combinations thereof.

6. A method of producing an exhaust gas purification apparatus comprising
a substrate and
a catalyst layer thereon, comprising a first catalyst particle (1) and a second catalyst particle (2), a first carrier particle (4) supporting the first catalyst particle (1) and a second carrier particle (4) supporting the second catalyst particle (2),
wherein the method comprises the following steps (a), (b), (c) and (g):
(a) impregnating a first carrier particle (4) with a first aqueous solution containing Pd salt and Rh salt, and drying it to obtain a first unfired catalyst;
(b) impregnating a second carrier particle (4) with a second aqueous solution containing Pd salt and Rh salt, and drying it to obtain a second unfired catalyst;
(c) firing the first unfired catalyst and the second unfired catalyst to obtain the first catalyst particle (1) and the second catalyst particle (2); and
(g) forming the catalyst layer comprising the first catalyst particle (1) and the second catalyst particle (2) on the substrate;
wherein the molar ratio of Rh to the total of Pd and Rh in the first catalyst particle (1) is 0.50 times or less of the molar ratio of Rh to the total of Pd and Rh in the second catalyst particle (2).

## Patentansprüche

1. Abgasreinigungsvorrichtung, welche ein Substrat und eine Katalysatorschicht darauf aufweist, wobei die Katalysatorschicht ein erstes Katalysatorteilchen (1), ein zweites Katalysatorteilchen (2), ein erstes Trägerteilchen (4), das das erste Katalysatorteilchen trägt (1) und ein zweites Trägerteilchen (4) aufweist, das das zweite Katalysatorteilchen (2) trägt;
wobei das erste Katalysatorteilchen (1) ein Pd-Rh-Legierungsteilchen ist;
wobei das zweite Katalysatorteilchen (2) ein Pd-Rh-Legierungsteilchen ist; und
wobei das Molverhältnis von Rh zur Gesamtmenge von Pd und Rh in dem ersten Katalysatorteilchen (1) das 0,50-fache oder weniger des Molverhältnisses von Rh zur Gesamtmenge von Pd und Rh in dem zweiten Katalysatorteilchen (2) beträgt.

2. Abgasreinigungsvorrichtung nach Anspruch 1, wobei das Molverhältnis von Rh zu der Gesamtmenge von Pd und Rh in dem ersten Katalysatorteilchen (1) das 0,20-fache oder weniger des Molverhältnisses von Rh zu der Gesamtmenge von Pd und Rh in dem zweiten Katalysatorteilchen (2) beträgt.

3. Abgasreinigungsvorrichtung nach Anspruch 1 oder 2, wobei das erste Katalysatorteilchen (1) mehr als 90 Molprozent Pd bezogen auf die darin enthaltene Gesamtmenge an Metallatomen enthält, und wobei das zweite Katalysatorteilchen (2) 30 Molprozent oder mehr und 90 Molprozent oder weniger Pd und 10 Molprozent oder mehr und 70 Molprozent oder weniger Rh bezogen auf das darin enthaltene Gesamtmenge an Metallatomen enthält.

4. Abgasreinigungsvorrichtung nach einem der Ansprüche 1 bis 3, wobei das Gewichtsverhältnis des ersten Katalysatorteilchens (1) zu dem zweiten Katalysatorteilchen (2) 0,1 oder mehr und 20,0 oder weniger beträgt.

5. Abgasreinigungsvorrichtung nach einem der Ansprüche 1 bis 4, wobei das mindestens eine Trägerteilchen (4) ein Material enthält, das aus der Gruppe ausgewählt worden ist, die ein Aluminiumoxid, ein Ceroxid, ein Zirkonoxid, ein Siliziumdioxid, ein Titandioxid sowie deren festen Lösungen und deren Kombinationen umfasst.

6. Verfahren zur Herstellung einer Abgasreinigungsvorrichtung, welche ein Substrat und eine Katalysatorschicht darauf aufweist, wobei die Katalysatorschicht ein erstes Katalysatorteilchen (1), ein zweites Katalysatorteilchen (2), ein erstes Trägerteilchen (4), das das erste Katalysatorteilchen trägt (1) und ein zweites Trägerteilchen (4) aufweist, das das zweite Katalysatorteilchen (2) trägt, wobei das Verfahren die folgenden Schritte (a), (b), (c) und (g) umfasst:
(a) ein Imprägnieren eines ersten Trägerteilchens (4) mit einer ersten wässrigen Lösung, die ein Pd-Salz und ein Rh-Salz enthält, und ein Trocknen, um einen ersten ungebrannten Katalysator zu erhalten;
(b) ein Imprägnieren eines zweiten Trägerteilchens (4) mit einer zweiten wässrigen Lösung, die ein Pd-Salz und ein Rh-Salz enthält, und ein Trocknen, um einen zweiten ungebrannten Katalysator zu erhalten;
(c) ein Brennen des ersten ungebrannten Katalysators und des zweiten ungebrannten Katalysators, um das erste Katalysatorteilchen (1) und das zweite Katalysatorteilchen (2) zu erhalten; und
(g) ein Bilden der Katalysatorschicht, die das erste Katalysatorteilchen (1) und das zweite Katalysatorteilchen (2) auf dem Substrat aufweist;
wobei das Molverhältnis von Rh zur Gesamtmenge von Pd und Rh in dem ersten Katalysatorteilchen (1) das 0,50-fache oder weniger des Molverhältnisses von Rh zu der Gesamtmenge von Pd und Rh in dem zweiten Katalysatorteilchen (2) beträgt.

## Revendications

1. Appareil de purification de gaz d'échappement comprenant un substrat et une couche de catalyseur sur celui-ci, dans lequel la couche de catalyseur comprend une première particule de catalyseur (1), une seconde particule de catalyseur (2), une première particule porteuse (4) supportant la première particule de catalyseur (1) et une seconde particule porteuse (4) supportant la seconde particule de catalyseur (2),
dans lequel la première particule de catalyseur (1) est une particule d'alliage Pd-Rh ;
dans lequel la seconde particule de catalyseur (2) est une particule d'alliage Pd-Rh ; et
dans lequel le rapport molaire de Rh sur le total de Pd et Rh dans la première particule de catalyseur (1) est égale à 0,50 fois ou moins le rapport molaire de Rh sur le total de Pd et Rh dans la seconde particule de catalyseur (2).

2. Appareil de purification de gaz d'échappement selon la revendication 1, dans lequel le rapport molaire de Rh sur le total de Pd et Rh dans la première particule de catalyseur (1) est de 0,20 fois ou moins le rapport molaire de Rh sur le total de Pd et Rh dans la seconde particule de catalyseur (2).

3. Appareil de purification de gaz d'échappement selon la revendication 1 ou 2, dans lequel la première particule de catalyseur (1) contient plus de 90 % molaire de Pd, sur la base du total des atomes de métal contenu dans celle-ci, et la seconde particule de catalyseur (2) contient 30 % molaire ou plus et 90 % molaire ou moins de Pd et 10 % molaire ou plus et 70 % molaire ou moins de Rh sur la base du total des atomes de métal contenus dans celle-ci.

4. Appareil de purification de gaz d'échappement selon l'une quelconque des revendications 1 à 3, dans lequel le rapport en poids de la première particule de catalyseur (1) par rapport à la seconde particule de catalyseur (2) est de 0,1 ou plus et 20,0 ou moins.

5. Appareil de purification de gaz d'échappement selon l'une quelconque des revendications 1 à 4, dans lequel l'au moins une particule porteuse (4) contient un matériau sélectionné dans le groupe constitué par l'alumine, l'oxyde de cérium, l'oxyde de zirconium, le dioxyde de silicium, le dioxyde de titane et les solutions solides de ceux-ci et les combinaisons de ceux-ci.

6. Procédé de production d'un appareil de purification de gaz d'échappement comprenant un substrat et
une couche de catalyseur sur celui-ci, comprenant une première particule de catalyseur (1) et une seconde particule de catalyseur (2), une première particule porteuse (4) supportant la première particule de catalyseur (1) et une seconde particule porteuse (4) supportant la seconde particule de catalyseur (2),
dans lequel le procédé comprend les étapes (a), (b), (c) et (g) suivantes :
(a) imprégnation d'une première particule porteuse (4) avec une première solution aqueuse contenant un sel de Pd et un sel de Rh, et séchage de celle-ci pour obtenir un premier catalyseur cru ;
(b) imprégnation d'une seconde particule porteuse (4) avec une seconde solution aqueuse contenant un sel de Pd et un sel de Rh, et séchage de celle-ci pour obtenir un second catalyseur cru ;
(c) chauffage du premier catalyseur cru et du second catalyseur cru afin d'obtenir la première particule de catalyseur (1) et la seconde particule de catalyseur (2) ; et
(g) formation de la couche de catalyseur comprenant la première particule de catalyseur (1) et la seconde particule de catalyseur (2) sur le substrat ;
dans lequel dans lequel le rapport molaire de Rh sur le total de Pd et Rh dans la première particule de catalyseur (1) est égale à 0,50 fois ou moins le rapport molaire de Rh sur le total de Pd et Rh dans la seconde particule de catalyseur (2).
